# EUROPEAN PATENT APPLICATION

(11) **EP 2 881 366 A1**
(43) Date of publication of application: **10.06.2015**
(21) Application number: 13195687.2
(22) Date of filing: 04.12.2013
(51) Int. Cl.: C01B 25/455, H01M 10/054, H01M 10/0567, H01M 10/0568

(54) **Method for manufacturing NaPO2F2**

(71) Applicant: Solvay SA, 1120 Bruxelles (BE)
(72) Inventor: KANG, Joo-Hee, Seoul (KR); HWANG, Seung-Gi, Ulsan (KR); OH, Mi-Soon, Seoul (KR)
(74) Representative: Mross, Stefan P.M.

(57) **Abstract**

NaPO₂F₂ is manufactured by the reaction of P₄O₁₀ with NaF forming a reaction mixture comprising NaPO₂F₂. Thusly-obtained NaPO₂F₂ can be advantageously used as a conducting salt or as an additive for sodium ion batteries.

## Description

### TECHNICAL FIELD

The present invention relates to a method for the manufacture of NaPO₂F₂.

### BACKGROUND OF THE INVENTION

Although, presently, lithium ion batteries are widely used as secondary batteries, studies have been conducted on sodium-ion secondary batteries in which sodium ion is employed in place of lithium ion of the lithium ion batteries.

The sodium ion batteries usually comprise an anode, a cathode and an electrolyte composition containing one or more solvent, and one or more conductive salt and/or additive.

International patent application WO 2010/109889 Al discloses a sodium ion secondary battery which is provided with a positive electrode, a negative electrode having a negative electrode active material, and a nonaqueous electrolyte solution containing a nonaqueous solvent, wherein a hard carbon is used as the negative electrode active material and the nonaqueous solvent is substantially composed of propylene carbonate, a mixed solvent of ethylene carbonate and diethyl carbonate, or a mixed solvent of ethylene carbonate and propylene carbonate.

International patent application WO 2012/132813 A1 further discloses an additive for sodium ion secondary batteries containing a compound that is composed of a saturated cyclic carbonate having a fluoro group and/or a chain carbonate having a fluoro group, and a sodium ion secondary battery comprising a nonaqueous electrolyte solution which contains the additive for sodium ion secondary batteries and a nonaqueous solvent that is composed of a saturated cyclic carbonate or a nonaqueous solvent that is composed of a saturated cyclic carbonate and a chain carbonate; a positive electrode; and a negative electrode which has a coating film on the surface, said coating film being composed of a composite material containing carbon, oxygen, fluorine and sodium, and which contains a negative electrode active material that is composed of hard carbon.

NaPO₂F₂ is a component that may be used as an electrolyte salt and/or additive in an electrolyte composition for sodium ion batteries.

### DESCRIPTION OF THE INVENTION

An object of the present invention is to provide a novel synthetic route for the preparation of NaPO₂F₂. Another object of the present invention is to provide a process for manufacturing NaPO₂F₂ which can easily be handled and does not produce high amount of impurities. These objects and other objects are achieved by the invention as outlined in the patent claims.

According to one aspect of the present invention, NaPO₂F₂ is manufactured by the reaction of P₄O₁₀ with NaF. The resulting reaction mixture comprises NaPO₂F₂. It is assumed that Na₃PO₄ is present in the initial reaction mixture as by-product according to the reaction equation

P₄O₁₀ + 6 NaF → 3 NaPO₂F₂ + Na₃PO₄

The molar ratio of NaF to P₄O₁₀ is preferably equal to or greater than 5. It is preferably equal to or lower than 10, more preferably equal to or lower than 8.

Preferably, the reaction is performed in the absence of water or moisture. Thus, the reaction may be performed at least for a part of its duration in the presence of an inert gas; dry nitrogen is very suitable, but other dry inert gases may be applied, too. The reaction can be performed in an autoclave or in other reactors. It is preferred to perform the reaction in apparatus made from steel or other materials resistant against corrosion, e.g. in reactors made of or clad with Monel metal.

The sodium fluoride applied is preferably comminuted, e.g. milled to obtain a higher contact surface between phosphoric acid anhydride and NaF. It is preferred to mix the reactants thoroughly. For example, this can be performed, preferably in the presence of dry inert gas, e.g. nitrogen, in a dry box or in a mixer, e.g. a mixer with three dimensional flow.

The reaction time is selected such that the desired degree of conversion is achieved. Often, a reaction time of 10 minutes to 10 hours, preferably to around 5 hours gives good results.

The reaction temperature is preferably equal to or higher than 225°C, preferably equal to or higher than 250°C.

The reaction temperature is preferably equal to or lower than 325°C, preferably equal to or lower than 300°C.

If desired a reactor can be applied with internal heating or external heating.

The resulting reaction mixture is in solid form. If desired, it is comminuted, e.g. milled, to provide a larger contact surface if it is intended to dissolve constituents of it.

The NaPO₂F₂ formed can be isolated from the resulting reaction mixture, if desired. This can be achieved by dissolving it with solvents which preferentially dissolve NaPO₂F₂. Aprotic and protic organic and inorganic solvents are suitable, especially polar solvents. Organic protic or aprotic solvents can be used for the extraction, too.

Suitable protic organic solvents are alcohols. Alcohols with one, two or three hydroxy groups in the molecule are preferred. Methanol, ethanol, n-propanol, i-propanol, glycol and glycerine are preferred alcohols. Glycol alkyl ethers, e.g. diglycol methyl ether, are also suitable. Also acetone, in its tautomeric form, can be considered as protic solvent. Another highly suitable solvent for NaPO₂F₂ is acetone. This solvent dissolves a great amount of NaPO₂F₂, but at most neglectable amounts of NaF. Therefore, the present invention further concerns a method for purification of NaPO₂F₂ wherein NaPO₂F₂ containing NaF and/or NaPF₆ is contacted with a solvent comprising at least one polar solvent. The solvent comprising at least one protic polar solvent, in particular acetone, can be preferably used in this purpose.

Aprotic polar solvents are also very suitable for the extraction of NaPO₂F₂ from the reaction mixture. Preferably, the aprotic organic solvent is selected from the group of dialkyl carbonates (which are linear) and alkylene carbonates (which are cyclic), and wherein the term "alkyl" denotes preferably C1 to C4 alkyl, the term "alkylene" denotes preferably C2 to C7 alkylene groups, including a vinylidene group, wherein the alkylene group preferably comprises a bridge of 2 carbon atoms between the oxygen atoms of the -O-C(O)-O- group ; ketones, nitriles and formamides. Dimethyl formamide, carboxylic acid amides, for example, N,N-dimethyl acetamide and N,N-diethyl acetamide, acetone, acetonitrile, linear dialkyl carbonates, e.g. dimethyl carbonate, diethyl carbonate, methyl ethyl carbonate, cyclic alkylene carbonates, e.g. ethylene carbonate, propylene carbonate, and vinylidene carbonate, are suitable solvents.

The solvents, such as diethyl carbonate, dimethyl carbonate, propylene carbonate, acetonitrile, dimethoxyethane, acetone, are very bad solvents for NaF; accordingly, they are well suited to separate mixtures comprising NaPO₂F₂ and NaF. They can advantageously be used for purification purposes and as solvents or components of solvents in electrolyte solutions for Na ion batteries with the possible exception of acetone which is very suitable for purification purposes, but is not very suitable as solvent or solvent component in electrolyte solutions.

It is also possible to use mixtures containing one or more organic protic or aprotic solvents. It is preferred that the pH of the organic solvents applied for extraction, of the NaPO₂F₂ formed in the reaction is selected such that undesired hydrolysis of NaPO₂F₂ is prevented. Especially, the pH is equal to or lower than 7 to prevent hydrolysis. It is preferred to keep the pH at a value of equal to or lower than 7 during the contact of NaPO₂F₂ formed with the organic solvent or solvents.

Mixtures of protic solvents can be applied for the isolation of NaPO₂F₂, for example, mixtures of alcohols with 1, 2 or 3 hydroxy groups, e.g., mixtures of methanol, ethanol, isopropanol, n-propanol, glycol, glycerine or diglycol.

Mixtures of aprotic organic solvents, especially, polar aprotic solvents, can also be applied, for example, mixtures of one of the solvents mentioned above, e.g. with ethylene carbonate or propylene carbonate.

Of course, it also possible to apply mixtures which comprise one or more protic organic solvents and one or more aprotic organic solvents. For example, mixtures containing an alcohol like methanol, ethanol or i-propanol, and a nitrile, for example, acetonitrile, or propylene carbonate, can be applied.

The extraction may be performed in a known manner, for example, by stirring the reaction mixture with the solvent (extractant) directly in the reactor, or after removing the reaction mixture from the reactor and optionally crushing or milling, in a suitable vessel, e.g. a Soxhlet vessel.

The liquid phase containing NaPO₂F₂ dissolved in the solvent can be separated from the non-dissolved constituents of the reaction mixture in a known manner. For example, the solution can be passed through a filter, or it can be decanted, or the separation can be effected by centrifugation. The solution of NaPO₂F₂ in water-free solvents is useful as such, e.g. as an additive for the manufacture of electrolyte solutions for sodium ion batteries.

The isolated NaPO₂F₂ via the method of the present invention can be used as an additive for the manufacture of electrolyte composition for sodium ion batteries. Therefore, another aspect of the present invention concerns an electrolyte composition for sodium ion battery comprising the NaPO₂F₂ prepared by the method of the present invention.

In the present invention, the concentration of the NaPO₂F₂ prepared by the method of the present invention in the electrolyte composition is preferably at least 0.1 wt%, more preferably at least 0.5 wt %, still more preferably at least 0.8 wt %, relative to the total weight of the electrolyte composition. In the present invention, the concentration of the sodium compound in the electrolyte composition is preferably up to 2.0 wt %, more preferably up to 1.5 wt %, still more preferably up to 1.2 wt %, relative to the total weight of the electrolyte composition.

In the present invention, the electrolyte composition for sodium ion batteries comprising the NaPO₂F₂ may contain another conducting salt. The conducting salt is preferably at least one sodium salt selected from the group consisting of NaPF₆, NaBF₄, NaClO₄, NaAsF₆, NaTaF₆, NaAlCl₄, Na₂B₁₀Cl₁₀, NaCF₃SO₃, Na(CF₃SO₂)₂N, Na(C₂F₅SO₂)₂N, NaB(C₆H₅)₄, NaCH₃SO₃, Na(SO₂CF₃)₃C, and any combination thereof, more preferably NaPF₆, NaBF₄, NaAsF₆, NaTaF₆, NaCF₃SO₃, Na(CF₃SO₂)₂N, Na(C₂F₅SO₂)₂N, Na(SO₂CF₃)₃C, and any combination thereof, still more preferably NaPF₆ or Na(CF₃SO₂)₂N. The concentration of the conducting salt in the electrolyte composition is preferably 0.1 wt % to 3.0 wt %, more preferably 0.5 wt % to 1.5 wt %, still more preferably 0.8 wt % to 1.2 wt %, relative to the total weight of the electrolyte composition, but the present invention is not limited thereto. The electrolyte composition for sodium ion batteries preferably comprises sodium difluorophosphate in combination with NaPF₆.

In the present invention, the electrolyte composition may further comprise at least one suitable additive. In particular, the electrolyte composition for sodium ion battery may further comprise a halogenated organic compound as the additive. The halogenated organic compounds useful as additives are, for example, fluorinated carbonic esters which are selected from the group of fluorinated ethylene carbonates, polyfluorinated dimethyl carbonates, fluorinated ethyl methyl carbonates, and fluorinated diethyl carbonates are other solvents or, preferably, suitable additives in the electrolyte composition. Preferred fluorinated carbonates are monofluoroethylene carbonate, 4,4-difluoro ethylene carbonate, 4,5-difluoro ethylene carbonate, 4-fluoro-4-methyl ethylene carbonate, 4,5-difluoro-4-methyl ethylene carbonate, 4-fluoro-5-methyl ethylene carbonate, 4,4-difluoro-5-methyl ethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoro ethylene carbonate, 4-(fluoromethyl)-5-fluoro ethylene carbonate, 4-fluoro-4,5-dimethyl ethylene carbonate, 4,5-difluoro-4,5-dimethyl ethylene carbonate, and 4,4-difluoro-5,5-dimethyl ethylene carbonate ; dimethyl carbonate derivatives including fluoromethyl methyl carbonate, difluoromethyl methyl carbonate, trifluoromethyl methyl carbonate, bis(difluoro)methyl carbonate, and bis(trifluoro)methyl carbonate ; ethyl methyl carbonate derivatives including 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate ; and diethyl carbonate derivatives including ethyl (2-fluoroethyl) carbonate, ethyl (2,2-difluoroethyl) carbonate, bis(2-fluoroethyl) carbonate, ethyl (2,2,2-trifluoroethyl) carbonate, 2,2-difluoroethyl 2'-fluoroethyl carbonate, bis(2,2-difluoroethyl) carbonate, 2,2,2-trifluoroethyl 2'-fluoroethyl carbonate, 2,2,2-trifluoroethyl 2',2'-difluoroethyl carbonate, and bis(2,2,2-trifluoroethyl) carbonate, 4-fluoro-4-vinylethylene carbonate, 4-fluoro-5-vinylethylene carbonate, 4,4-difluoro-4-vinylethylene carbonate, 4,5-difluoro-4-vinylethylene carbonate, 4-fluoro-4,5-divinylethylene carbonate, 4,5-difluoro-4,5-divinylethylene carbonate, 4-fluoro-4-phenylethylene carbonate, 4-fluoro-5-phenylethylene carbonate, 4,4-difluoro-5-phenylethylene carbonate, 4,5-difluoro-4-phenylethylene carbonate and 4,5-difluoro-4,5-diphenylethylene carbonate, fluoromethyl phenyl carbonate, 2-fluoroethyl phenyl carbonate, 2,2-difluoroethyl phenyl carbonate and 2,2,2-trifluoroethyl phenyl carbonate, fluoromethyl vinyl carbonate, 2-fluoroethyl vinyl carbonate, 2,2-difluoroethyl vinyl carbonate and 2,2,2-trifluoroethyl vinyl carbonate, fluoromethyl allyl carbonate, 2-fluoroethyl allyl carbonate, 2,2-difluoroethyl allyl carbonate and 2,2,2-trifluoroethyl allyl carbonate. The halogenated organic compound useful as an additive is more preferably fluorinated cyclic carbonates, still more preferably a monofluoroethylene carbonate. However, the additives which can be used in the present invention are not limited thereto.

The content of an additive in the electrolyte composition, if any, is preferably 0.1 to 10.0 wt %, more preferably 0.5 to 5.0 wt %, still more preferably 0.5 to 2.0 wt %, relative to the total weight of the electrolyte composition.

In the present invention, the electrolyte composition generally comprises at least one solvent. The solvent of the electrolyte composition for sodium ion battery preferably includes at least one non-aqueous solvent selected from the group consisting of cyclic carbonates, acyclic carbonates and any combination thereof. Examples of cyclic carbonates include cyclic alkylene carbonates, such as ethylene carbonate, propylene carbonate, vinylidene carbonate and butylene carbonate. Examples of acyclic carbonates include acyclic dialkyl carbonates, such as dimethyl carbonate, methylethyl carbonate and diethyl carbonate. More preferably, the solvent includes at least one organic carbonate selected from the group consisting of acyclic dialkyl carbonates, cyclic alkylene carbonates, and combination thereof, still more preferably from the group consisting of ethylene carbonate, propylene carbonate, and diethyl carbonate. Other suitable solvents can be selected, for example, from lactones, formamides, pyrrolidinones, oxazolidinones, nitroalkanes, N,N-substituted urethanes, sulfolane, dialkyl sulfoxides, dialkyl sulfites, acetates, nitriles, acetamides, glycol ethers, dioxolanes, dialkyloxyethanes, and trifluoroacetamides. Particular examples of the solvents include dimethyl formamide, carboxylic acid amides, for example, N,N-dimethyl acetamide and N,N-diethyl acetamide, acetone, acetonitrile, and any combination thereof.

The at least one solvent may occupy the rest of content of the electrolyte composition in addition to the components described in the above, particularly in addition to NaPO₂F₂, the conducting salt and the additive. The content of the at least one solvent is preferably 85 to 99.7 wt %, more preferably 92 to 98.5 wt %, still more preferably 95.6 to 97.9 wt %, relative to the total weight of the electrolyte composition.

The above-mentioned electrolyte compositions can be prepared by mixing the constituents in a vessel.

Thusly-obtained electrolyte composition can be used as a component for sodium ion battery. As such, a further aspect of the present invention concerns a sodium ion battery comprising the electrolyte composition according to the present invention.

One of the advantages of the process of the invention is among others that substantially pure NaPO₂F₂, preferably free of impurities, can be obtained from cheap starting material via solid state reaction with high yield.

Thus, a still further aspect of the present invention concerns NaPO₂F₂ essentially free of NaF and/or NaPF₆. In the present invention, the term "essentially free of NaF and/or NaPF₆" is understood to denote in particular a content of NaF and/or NaPF₆ which is almost zero or may be only a very small amount which does not have a substantial impact on a subsequent use of the product. Preferably, the term "essentially free of NaF and/or NaPF₆" denotes a content of equal to or lower than 1 g, preferably equal to or lower than 0.1 g, more preferably, especially preferably equal to or lower than 0.01 g of NaF and/or NaPF₆ per 100g of NaPO₂F₂. Generally, the term "essentially free of NaF and/or NaPF₆" is understood to be a content of equal to or higher than 0.1 mg, of NaF and/or NaPF₆ per 100g of NaPO₂F₂.

While preferred embodiments of this invention have been shown and described, modifications thereof can be made by one skilled in the art without departing from the spirit or teaching of this invention. The embodiments described herein are exemplary only and are not limiting. Many variations and modifications of systems and methods are possible and are within the scope of the invention. Accordingly, the scope of protection is not limited to the embodiments described herein, but is only limited by the claims that follow, the scope of which shall include all equivalents of the subject matter of the claims.

The following examples will describe the invention in further detail without the intention to limit it.

### Example 1 : Synthesis and isolation of NaPO₂F₂

P₄O₁₀ (2.8389g ; 0.01 mol) and thoroughly-crushed NaF (2.5193 g; 0.06 mol) were given into a steel reactor having a lid, heated therein to a temperature of about 300°C for 5 hours under a nitrogen gas flow. The reactor was brought to ambient temperature, was then opened, and the solids contained therein were crushed to smaller particles. The particles were given into a Soxhlet vessel and extracted with acetone. From the combined solutions, the solvent was removed by evaporation in a rotary evaporator, and the resulting solid was subjected to analysis by ¹⁹F-NMR and ³¹P-NMR.

¹⁹F and ³¹P NMR spectroscopy for the synthetic NaPO₂F₂ sample was employed to determine the composition. The ¹⁹F spectra consisted of the typical doublets, *δ*_{F} = -83.19 ppm [J(P,F) = 939 Hz] that is assigned to PO₂F₂⁻, and ³¹P NMR contained a triplet with *δ*_{P} = -13.94 ppm [J(P,F) = 939 Hz]. This shows that NaPO₂F₂ has been synthesized with only little amount of impurities.

**Table 1. ¹⁹F and ³¹P NMR results for the NaPO₂F₂ sample**

| Sample | Solvent | ¹⁹F NMR (500 MHz) | ³¹P NMR (500 MHz) |
|---|---|---|---|
| NaPO₂F₂ | Acetone-d₆ | *δ* = -82.2, 84.19 ppm | *δ* = -9.3, 13.94, 18.57 ppm |

## Claims

1. A method for preparing NaPO₂F₂ wherein P₄O₁₀ is reacted with NaF.

2. The method according to claim 1, wherein the molar ratio of NaF to P₄O₁₀ is equal to or greater than 5.

3. The method according to claim 1 or 2, wherein the molar ratio of NaF to P₄O₁₀ is equal to or lower than 10.

4. The method according to anyone of claims 1 to 3, wherein the reaction is performed at a temperature equal to or higher than 250°C.

5. The method according to anyone of claims 1 to 4, wherein the reaction is performed at a temperature equal to or lower than 300°C.

6. The method according to anyone of claims 1 to 5, wherein NaPO₂F₂ is isolated from the reaction mixture by contacting the reaction mixture with at least one solvent selected from the group consisting of organic protic solvents and aprotic organic solvents.

7. The method according to claim 5, wherein the solution of NaPO₂F₂ dissolved in the solvent is subjected to a separation treatment to isolate NaPO₂F₂.

8. The method of claim 7, wherein the isolated NaPO₂F₂ is re-dissolved in at least one polar aprotic organic solvent to provide an electrolyte composition suitable for sodium ion batteries.

9. An electrolyte composition for sodium ion battery comprising NaPO₂F₂ prepared by any one of claims 1 to 8.

10. A sodium ion battery comprising the electrolyte composition according to claim 9.

11. NaPO₂F₂ essentially free of NaF and/or NaPF₆.

12. A method for purification of NaPO₂F₂ wherein NaPO₂F₂ containing NaF and/or NaPF₆ is contacted with a solvent comprising at least one polar solvent, preferably at least one protic polar solvent.
